# EUROPÄISCHE PATENTSCHRIFT

(11) **EP 2 068 125 B1**
(45) Veröffentlichungstag und Bekanntmachung des Hinweises auf die Patenterteilung: **16.07.2014**
(21) Anmeldenummer: 08016421.3
(22) Anmeldetag: 18.09.2008
(51) Int. Cl.: G01D 5/347

(54) **Abtastbaueinheit einer Positionsmesseinrichtung**
Sampling component of a positioning device
Unité de balayage d'un dispositif de mesure de position

(30) Priorität: 04.12.2007 DE 102007058643
(43) Veröffentlichungstag der Anmeldung: 10.06.2009
(73) Patentinhaber: Dr. Johannes Heidenhain GmbH, 83301 Traunreut (DE)
(72) Erfinder: Tondorf, Sebastian, 83329 Waging am See (DE); Kühler, Markus, 83365 Nußdorf/Sondermoning (DE)

(56) Entgegenhaltungen:
- EP-A1- 1 306 651
- DE-A1- 2 427 725
- DE-A1- 3 124 723
- US-A- 4 988 212
- US-A- 6 084 234

## Beschreibung

Die Erfindung betrifft eine Abtastbaueinheit einer Positionsmesseinrichtung.

Positionsmesseinrichtungen, wie sie beispielsweise in der US 2004/0263846 A1 beschrieben sind, dienen zur Messung von Längen sowie Wegen und werden insbesondere bei Bearbeitungsmaschinen zur Messung der Relativbewegung eines Werkzeugs bezüglich eines zu bearbeitenden Werkstücks, bei Koordinatenmessmaschinen und vermehrt auch in der Halbleiterindustrie zur Positionierung von Wafern eingesetzt.

Die Anforderungen an Positionsmesseinrichtungen werden immer höher, es wird laufend eine höhere Auflösung sowie eine höhere Genauigkeit und Reproduzierbarkeit der Positionsmessung gefordert. Dabei soll ein kompakter mechanischer Aufbau sowie eine einfache und störungssichere Messwertgenerierung und Messwertübertragung vorhanden sein.

Ein kompakter Aufbau und eine störungssichere Messwertgenerierung und Messwertübertragung bedingt die Integration von immer mehr elektrischen Bauelementen in der Abtastbaueinheit selbst. So werden hierzu vermehrt Sensorchips eingesetzt, in denen auf kleinstem Raum ein Array von Abtastsensoren, beispielsweise lichtempfindliche Detektoren bei lichtelektrisch abtastbarem Maßstab, sowie Signalverarbeitungsmittel wie beispielsweise A/D-Wandler, Verstärker, Mikroprozessoren und Schnittstellen angeordnet sind. Zusätzlich wird die von der Abtastbaueinheit der Positionsmesseinrichtung abzutastende Messteilung immer feiner und die Verfahrgeschwindigkeit der Abtastbaueinheit gegenüber dem Maßstab immer höher, was zu einer erheblichen Erhöhung der Frequenz der Abtastsignale führt, die von den Signalverarbeitungsmitteln zu verarbeiten sind. Die zu dieser Verarbeitung erforderlichen Verstärker erzeugen relativ viel Wärme. Daraus resultiert eine vermehrte Wärmeerzeugung in der Abtastbaueinheit. Diese Wärme beeinflusst einerseits die elektrischen Bauelemente selbst in negativer Weise, indem die Lebensdauer sinkt und sich mit der Zeit Kenndaten verändern. Die Wärme beeinflusst andererseits auch die Mechanik der Abtastbaueinheit negativ, indem sich Bauteile der Abtastbaueinheit undefiniert ausdehnen, was zu Messungenauigkeiten führen kann.

Ansätze zur Lösung dieses Problems finden sich beispielsweise in der DE 24 27 725 A1. Um bei einer Winkelmesseinrichtung die Wärme von elektrischen Bauelementen abzuführen wird gefordert, dass der Flansch der Winkelmesseinrichtung in Kontakt mit einer Werkzeugmaschine gut wärmeleitend verbunden wird.

Gemäß der US 6 084 234 A ist zur Wärmeableitung eine thermisch leitende Verbindung zwischen den wärmeerzeugenden Bauelementen und einer Außenwandung der Winkelmesseinrichtung vorgesehen.

Die US 4 988 212 A zeigt eine Abtastbaueinheit einer Positionsmesseinrichtung, bei der zur Wärmeabfuhr das wärmeerzeugende Bauelement über eine wärmeleitende Verbindung mit dem Grundkörper verbunden ist.

Der Erfindung liegt daher die Aufgabe zugrunde, eine Abtastbaueinheit anzugeben, mit der eine hohe Messgenauigkeit erreichbar ist.

Diese Aufgabe wird erfindungsgemäß durch die Merkmale des Anspruchs 1 gelöst.

Mit der Erfindung wird ein kompakter Aufbau einer Abtastbaueinheit ermöglicht, wobei auch eine hohe Messgenauigkeit und eine reproduzierbare Positionsmessung erreichbar ist.

In den abhängigen Ansprüchen sind vorteilhafte Ausgestaltungen der Erfindung angegeben.

Besonders vorteilhaft ist, dass die zweite Kontaktfläche elastisch nachgiebig ausgestaltet ist. Hierzu ist die zweite Kontaktfläche Teil eines federnden Bleches, das in Richtung des zweiten Ortes des zu messenden Objektes federnd auslenkbar ausgebildet ist. Alternativ dazu kann die zweite Kontaktfläche bzw. das Kontaktelement mittels federnder Mittel am Grundkörper nachgiebig angeordnet sein. Diese federnden Mittel können gleichzeitig die Funktion der Abdichtung zwischen dem Kontaktelement und dem Grundkörper ausüben.

Die zweite Kontaktfläche ist vorzugsweise Bestandteil eines abnehmbaren Deckels, der den Innenraum der Abtastbaueinheit abdeckt.

Die erste Kontaktfläche ist im nicht angebauten Zustand gegenüber der zweiten Kontaktfläche zurückgesetzt. Dadurch kontaktiert die erste Kontaktfläche das zu messende Objekt erst, nachdem die zweite Kontaktfläche bereits Kontakt mit dem zu messenden Objekt hat.

Vorzugsweise ist das Kontaktelement gegenüber dem Grundkörper wärmeisoliert angeordnet, so dass abzuleitende Wärme nicht auf den Grundkörper übertragen wird.

Der Wärmeleitpfad vom wärmeerzeugenden elektrischen Bauelement zum Kontaktelement umfasst vorzugsweise ein Wärmeleitelement, das elastisch ausgebildet ist. Vorzugsweise ist es auch elektrisch isolierend. Dieses Wärmeleitelement ist zwischen dem wärmeerzeugenden elektrischen Bauelement und dem Kontaktelement insbesondere eingespannt angeordnet. Das Wärmeleitelement kontaktiert dabei einerseits das elektrische Bauelement und andererseits das Kontaktelement wärmeübertragend.

Die Abtastplatte, welche die Genauigkeit der Positionsmessung mitbestimmt, ist bevorzugt an dem Grundkörper fixiert.

Die Erfindung wird mit Hilfe von Ausführungsbeispielen näher erläutert.

Dabei zeigt
- Figur 1: eine perspektivische Darstellung einer Längenmesseinrichtung mit einer Abtastbaueinheit;
- Figur 2: die Abtastbaueinheit gemäß Figur 1 im Schnitt A-A;
- Figur 3: die Abtastbaueinheit gemäß Figur 1 im Schnitt A-A im angebauten Zustand an ein zu messendes Objekt;
- Figur 4: eine Prinzipdarstellung einer zweiten Abtastbaueinheit im Querschnitt;
- Figur 5: eine Prinzipdarstellung einer dritten Abtastbaueinheit im Querschnitt;
- Figur 6: eine schematische Darstellung eines Anbaus einer Abtastbaueinheit an ein zu messendes Objekt, und
- Figur 7: eine weitere schematische Darstellung eines Anbaus einer Abtastbaueinheit an ein zu messendes Objekt.

Die Erfindung ist in den Figuren am Beispiel einer optischen Längenmesseinrichtung dargestellt, mit der die Relativlage zweier in Messrichtung X gegeneinander verschiebbarer Objekte 1 und 2 gemessen werden soll. Dabei wird ein Maßstab 3 von einer relativ zum Maßstab 3 in Messrichtung X bewegbaren Abtastbaueinheit 10 abgetastet. Der Maßstab 3 weist eine Messteilung 8 auf, die von der Abtastbaueinheit 10 im Auflicht abgetastet wird. Nachfolgend werden verschiedene Varianten erfindungsgemäß ausgestalteter Abtastbaueinheiten 10 näher erläutert. Die verschiedenen Varianten der Abtastbaueinheiten werden nachfolgend mit dem Bezugszeichen 10 und der Nummer der jeweiligen Variante als Index gekennzeichnet.

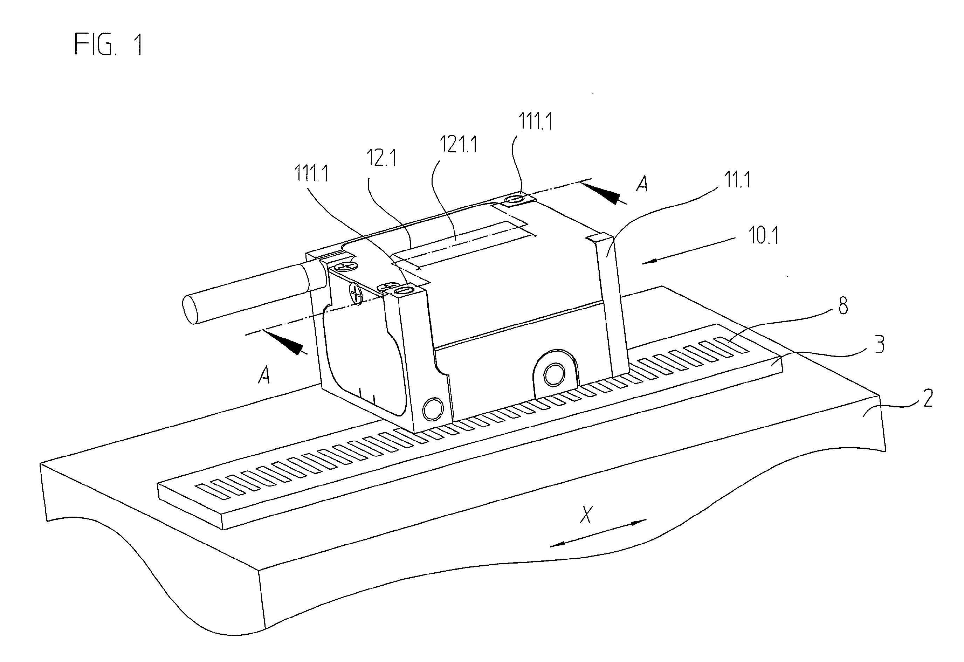

In den Figuren 1 bis 3 ist eine erste Variante einer Abtastbaueinheit 10.1 dargestellt. Die Abtastbaueinheit 10.1 umfasst eine nicht dargestellte Beleuchtungseinheit, die ein Lichtbündel aussendet, welches auf den Maßstab 3 trifft, dort von der Messteilung 8 reflektiert wird und weiter durch eine Abtastplatte 4.1 verläuft und schließlich auf lichtempfindliche Abtastsensoren 5.1 trifft. Das Lichtbündel der Abtastbaueinheit 10 wird dabei von der Messteilung 8 am Maßstab 3 positionsabhängig moduliert. Die Abtastplatte 4.1 weist in bekannter Weise eine an das generierte Lichtbündel angepasste Abtastteilung auf.

Die Abtastsensoren 5.1, beispielsweise als Opto-Asic ausgebildet, befinden sich auf einer Leiterplatte 6.1. Auf der Leiterplatte 6.1 befinden sich weitere elektrische Bauelemente zur Verarbeitung der Abtastsignale, beispielsweise A/D-Wandler, Verstärker 7.1, Mikroprozessoren bzw. Schnittstelleneinheiten. Diese weiteren elektrischen Bauelemente können auch mit den Abtastsensoren gemeinsam in einem Opto-Asic ausgebildet sein.

Um einen kompakten Aufbau der Abtastbaueinheit 10.1 zu erreichen, sind die elektrischen Bauelemente 5.1, 7.1 geschützt in einem Innenraum 15.1 der Abtastbaueinheit 10.1 angeordnet. Aufgrund der kleinen Teilungsperioden der Messteilung 8 und der hohen Verfahrgeschwindigkeit der Abtastbaueinheit 10.1 gegenüber dem Maßstab 3 werden hochfrequente periodische Abtastsignale generiert, die von den weiteren elektrischen Bauelementen, insbesondere den Verstärkern 7.1 rauscharm weiterverarbeitet werden müssen. Die elektrischen Bauelemente - von denen beispielhaft nur der Verstärker 7.1 schematisch dargestellt und bezeichnet ist - zur Verarbeitung der Abtastsignale haben einen hohen Energiebedarf und generieren daher relativ viel Verlustwärme.

Die Abtastbaueinheit 10.1 weist einen Grundkörper 11.1 auf, an dem die Abtastplatte 4.1 fixiert ist. Die Abtastsensoren 5.1 erfassen die Relativlage zwischen dem Maßstab 3 und der Abtastplatte 4.1, so dass die Abtastplatte 4.1 die genauigkeitsbestimmende Komponente der Abtastbaueinheit 10.1 ist. Die Abtastplatte 4.1 ist mittels des Grundkörpers 11.1 an einem der zu messenden Objekte 1 ortsfest anbaubar. Dieser Anbau ist besonders steif auszuführen, weshalb ein flächiger Kontakt zwischen dem Grundkörper 11.1 und dem zu messenden Objekt 1 realisiert wird. Dieser Kontakt wird im dargestellten Beispiel durch Schrauben 14.1 bewerkstelligt.

Die Leiterplatte 6.1 mit den wärmeerzeugenden elektrischen Bauelementen 7.1 ist wärmeisoliert am Grundkörper 11.1 angebaut und mit diesem gemeinsam handhabbar. Dies kann realisiert sein, indem die Leiterplatte 6.1 selbst aus einem Material geringer Wärmeleitung besteht und / oder die Leiterplatte 6.1 über wärmeisolierende Mittel und / oder mit möglichst wenig Kontakt am Grundkörper 11.1 befestigt ist. Von den wärmeerzeugenden elektrischen Bauelementen 7.1 ausgehend ist ein Wärmeleitpfad zu einem Kontaktelement 12.1 der Abtastbaueinheit 10.1 vorgesehen. Dieser Wärmeleitpfad weist im Beispiel ein Wärmeleitelement 13.1 auf, das dazu ausgelegt ist, um an den elektrischen Bauelementen 7.1 generierte Wärme vom Innenraum 15.1 der Abtastbaueinheit 10.1 zu dem Kontaktelement 12.1 zu übertragen. Im dargestellten Beispiel ist das Wärmeleitelement 13.1 ein elastisch nachgiebiges elektrisch isolierendes Teil, das einerseits das elektrische Bauelement 7.1 möglichst innig und großflächig kontaktiert und andererseits das Kontaktelement 12.1 möglichst innig und großflächig kontaktiert. Hierzu ist das Wärmeleitelement 13.1 zwischen den elektrischen Bauelementen 7.1 und dem Kontaktelement 12.1 flächig angeordnet und eingeklemmt. Das Wärmeleitelement 13.1 ist im Beispiel eine Wärmeleitfolie, insbesondere eine wärmeleitfähige Polymerfolie, die auch als Softtherm-Folie angeboten wird.

Der Grundkörper 11.1 ist besonders massiv ausgestaltet und weist Kontaktflächen 111.1 auf, die mittels Schrauben 14.1 als Befestigungselemente beim Anbau an einem ersten Ort 1.11 und 1.12 mit dem zu messenden Objekt 1 in Kontakt gebracht werden

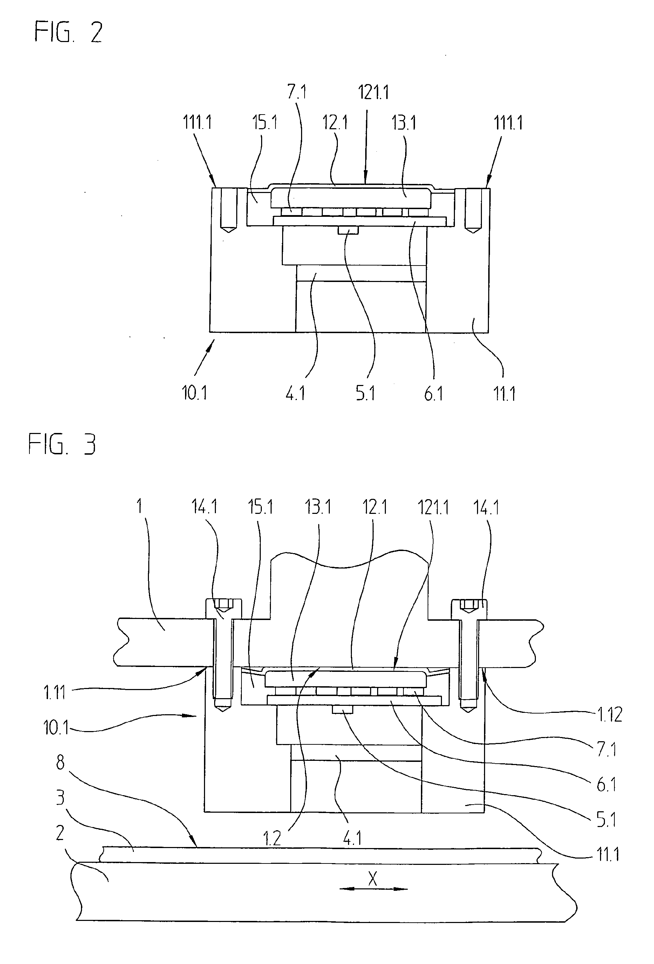

Das Kontaktelement 12.1 ist im dargestellten Beispiel als Deckel der Abtastbaueinheit 10.1 ausgeführt, der gegenüber der Kontaktfläche 111.1 des Grundkörpers 11.1 nachgiebig ist, so dass er beim Anbau nicht stört. Um beim Anbau des Grundkörpers 11.1 trotzdem einen guten wärmeübertragenden Kontakt mit dem zu messenden Objekt 1 zu erreichen, ist die Kontaktfläche 121.1 des Kontaktelementes 12.1 erhaben ausgeführt und elastisch nachgiebig. Diese Nachgiebigkeit wird durch eine flächige Ausbiegung bzw. Prägung eines dünnen Bleches, beispielsweise eben des Deckels erreicht. Wie in Figur 2 ersichtlich ist, befindet sich diese erhabene Kontaktfläche 121.1 räumlich zwischen zwei voneinander beabstandeten Kontaktflächen 111.1 des Grundkörpers 11.1. Die Kontaktflächen 111.1 des Grundkörpers 11.1 sind in diesem Fall parallel zu den Kontaktflächen 121.1 des erhabenen Kontaktelementes 12.1 angeordnet.

Das Material des Kontaktelementes 12.1 ist derart gewählt, dass es gut wärmeleitend ist. Das Kontaktelement 12.1 kann gegenüber dem Grundkörper 11.1 wärmeisolierend angeordnet werden, beispielsweise durch das Vorsehen von wärmeisolierenden Zwischenelementen. Diese Zwischenelemente können gleichzeitig als Dichtung zwischen dem Kontaktelement 12.1 und dem Grundkörper 11.1 wirken.

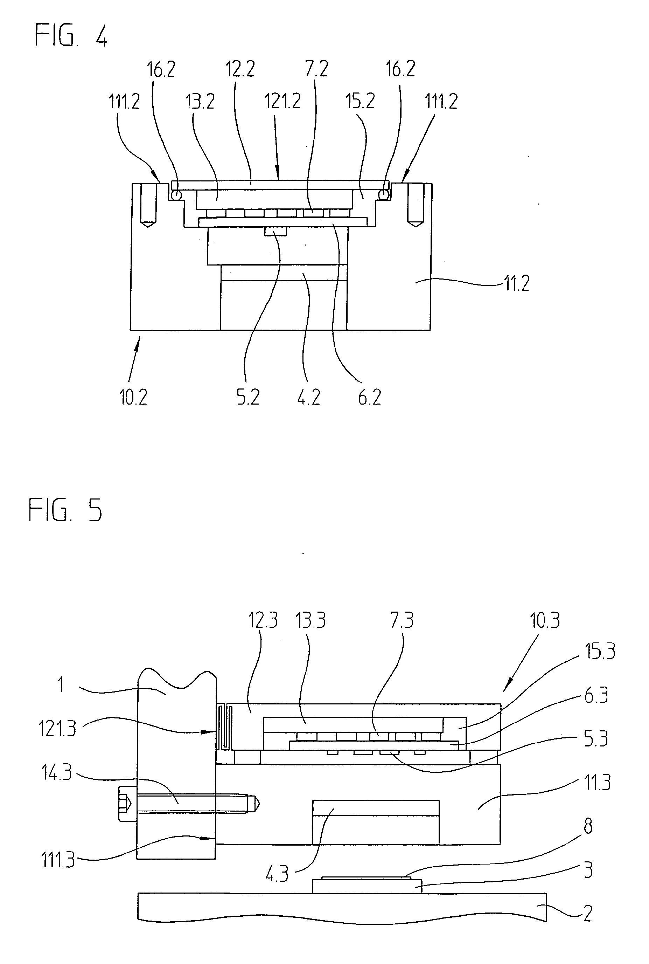

Figur 3 zeigt schematisch die Funktion der nachgiebigen Kontaktfläche 121.1 des Kontaktelementes 12.1. Die genauigkeitsbestimmenden Kontaktflächen 111.1 des Grundkörpers 11.1 werden über die Schrauben 14.1 mit dem zu messenden Objekt 1 verbunden. Bei diesem Anbau der Abtastbaueinheit 10.1 gelangt auch die Kontaktfläche 121.1 des Kontaktelementes 12.1 mit dem zu messenden Objekt 1 in Kontakt. Um einen großflächigen und innigen Kontakt zu gewährleisten, ohne die Positionierung des Grundkörpers 11.1 zu beeinflussen, ist die Kontaktfläche 121.1 in Befestigungsrichtung, also in Richtung senkrecht zur Kontaktfläche 121.1 elastisch nachgiebig. Da auch das zwischen der Kontaktfläche 121.1 des Kontaktelementes 12.1 und den elektrischen Bauelementen 7.1 liegende Wärmeleitelement 13.1 in Richtung der Nachgiebigkeit des Kontaktelementes 12.1 nachgiebig ist, ist die Wärmeübertragung gewährleistet. Durch diese Maßnahmen wird ein sicherer Wärmeleitpfad von den elektrischen Bauelementen 7.1 über das Wärmeleitelement 13.1 zu der gut wärmeleitenden Kontaktfläche 121.1 und weiter zu dem zu messenden Objekt 1 geschaffen. Die Wärme der Abtastbaueinheit 10.1 wird dadurch gezielt in Richtung des zu messenden Objektes 1 geführt, das als Wärmesenke wirkt. Wärmesenke bedeutet dabei, dass die thermische Masse des zu messenden Objektes 1 größer ist als die thermische Masse der Abtastbaueinheit 10.1 und sich daher die in von der Abtastbaueinheit 10.1 in das zu messende Objekt 1 eingebrachte Wärme gut verteilt. Einerseits wird dadurch eine gute Wärmeableitung von der Abtastbaueinheit 10.1 garantiert und andererseits wird auch die Temperatur des zu messenden Objekts 1 aufgrund der Wärmeverteilung nur unwesentlich erhöht. Die Kontaktflächen 111.1 sind von der Kontaktfläche 121.1 einerseits in der Anbauebene voneinander beabstandet angeordnet und andererseits durch die zurückgesetzte Ausgestaltung des Deckels, wie anhand der Figur 4 ersichtlich ist.

Im Messbetrieb, wenn also die Abtastbaueinheit 10.1 an das zu messende Objekt 1 angebaut ist, hat das Kontaktelement 12.1 gut wärmeleitenden Kontakt mit dem zu messenden Objekt 1 an einem zweiten Ort 1.2, so dass an das zu messende Objekt 1 Wärme abgegeben werden kann.

In nicht gezeigter Weise kann die Wärmeabfuhr auch noch dadurch unterstützt werden, dass am zu messenden Objekt 1 Kühlmittel vorgesehen werden. Diese Kühlmittel können Kühlrippen oder ein mit Kühlmedium durchflossener Kanal sein.

Das zweite Ausführungsbeispiel einer Abtastbaueinheit 10.2 ist in Figur 4 im Querschnitt schematisch dargestellt. Das Kontaktelement 12.2 wird wiederum vom Deckel gebildet, der den Innenraum 15.2 der Abtastbaueinheit 10.2 abdeckt. Im Unterschied zu der ersten oben beschriebenen Ausführungsform ist hier das Kontaktelement 12.2 selbst nicht federnd ausgebildet, sondern die Nachgiebigkeit der Kontaktfläche 121.2 ist gewährleistet, indem das Kontaktelement 12.2 über federnde Mittel 16.2 am Grundkörper 11.2 auslenkbar gelagert ist. Die federnd nachgiebigen Mittel 16.2 haben im Beispiel auch die Funktion der sicheren Abdichtung zwischen dem Kontaktelement 12.2 und dem Grundkörper 11.2. Die weiteren dargestellten Elemente, wie Abtastplatte 4.2, Abtastsensoren 5.2, Leiterplatte 6.2, elektrisches Bauelement 7.2, Wärmeleitelement 13.2 und Kontaktflächen 111.2 am Grundkörper 11.2 entsprechen der ersten Ausführungsform.

In Figur 5 ist eine dritte Variante einer Abtastbaueinheit 10.3 dargestellt. Die dargestellten Elemente, wie Abtastplatte 4.3, Leiterplatte 6.3, Wärmeleitelement 13.3 und elektrisches Bauelement 7.2 entsprechen der ersten Ausführungsform. Die Abtastbaueinheit 10.3 umfasst eine Beleuchtungseinheit, die ein Lichtbündel aussendet, welches auf den Maßstab 3 trifft, dort von der Messteilung 8 reflektiert wird und weiter durch die Abtastplatte 4.3 verläuft und schließlich auf lichtempfindliche Abtastsensoren 5.3 trifft. Das Lichtbündel wird dabei von der Messteilung 8 am Maßstab 3 positionsabhängig moduliert. Die Abtastplatte 4.3 weist in bekannter Weise eine an das generierte Lichtbündel angepasste periodische Abtastteilung auf.

Die Abtastsensoren 5.3 befinden sich auf einer Leiterplatte 6.3. Auf der Leiterplatte 6.3 befinden sich weitere elektrische Bauelemente zur Verarbeitung der Abtastsignale, beispielsweise A/D-Wandler, Verstärker 7.3, Mikroprozessoren bzw. Schnittstelleneinheiten.

Um einen kompakten Aufbau der Abtastbaueinheit 10.3 zu erreichen, sind die elektrischen Bauelemente 5.3, 7.3 in einem Innenraum 15.3 der Abtastbaueinheit 10.3 angeordnet. Aufgrund der kleinen Teilungsperioden der Messteilung 8 und der hohen Verfahrgeschwindigkeit der Abtastbaueinheit 10.3 gegenüber dem Maßstab 3 werden hochfrequente periodische Abtastsignale generiert, die von den weiteren elektrischen Bauelementen, insbesondere den Verstärkern 7.3 rauscharm weiterverarbeitet werden müssen. Die elektrischen Bauelemente - von denen beispielhaft nur der Verstärker 7.3 bezeichnet ist - zur Verarbeitung der Abtastsignale haben einen hohen Energiebedarf und generieren daher relativ viel Verlustwärme.

Die Abtastbaueinheit 10.3 weist einen Grundkörper 11.3 auf, an dem die Abtastplatte 4.3 fixiert ist. Die Abtastsensoren 5.3 erfassen die Relativlage zwischen dem Maßstab 3 und der Abtastplatte 4.3, so dass die Abtastplatte 4.3 die genauigkeitsbestimmende Komponente der Abtastbaueinheit 10.3 ist. Die Abtastplatte 4.3 ist mittels des Grundkörpers 11.3 an einem der zu messenden Objekte 1.3 ortsfest anbaubar. Dieser Anbau ist besonders steif auszuführen, weshalb ein flächiger Kontakt zwischen dem Grundkörper 11.3 und dem zu messenden Objekt 1.3 an einem ersten Ort realisiert wird. Dieser Kontakt wird im dargestellten Beispiel durch Schrauben 14.3 bewerkstelligt.

Die Leiterplatte 6.3 mit den wärmeerzeugenden elektrischen Bauelementen 7.3 ist wärmeisoliert am Grundkörper 11.3 angebaut und mit diesem gemeinsam handhabbar. Von den wärmeerzeugenden elektrischen Bauelementen 7.3 ausgehend ist ein Wärmeleitpfad zu einem Kontaktelement 12.3 der Abtastbaueinheit 10.3 vorgesehen. Dieser Wärmeleitpfad weist ein Wärmeleitelement 13.3 auf, das dazu ausgelegt ist, um an den elektrischen Bauelementen 7.3 generierte Wärme vom Innenraum 15.3 der Abtastbaueinheit 10.3 zu dem Kontaktelement 12.3 zu übertragen. Im dargestellten Beispiel ist das Wärmeleitelement 13.3 ein elastisch nachgiebiges elektrisch isolierendes Teil, das einerseits das elektrische Bauelement 7.3 möglichst großflächig kontaktiert und andererseits das Kontaktelement 12.3 möglichst großflächig kontaktiert. Das Wärmeleitelement 13.3 ist im Beispiel eine Wärmeleitfolie, insbesondere eine wärmeleitfähige Polymerfolie, die auch als Softtherm-Folie angeboten wird.

Die Abtastbaueinheit 10.3 wird durch Anbau des Grundkörpers 11.3 an dem zu messenden Objekt 1 ortsfest befestigt. Dabei tritt der Grundkörper 11.3 mit einer ersten Kontaktfläche 111.3 an einem ersten Ort mit dem zu messenden Objekt 1 in Kontakt und das Kontaktelement 12.3 mit einer zweiten Kontaktfläche 121.3 an einem zweiten Ort mit dem zu messenden Objekt 1 in Kontakt. Die Kontaktfläche 121.3 des Kontaktelementes 12.3, also die zweite Kontaktfläche 121.3 ist für den Anbau elastisch nachgiebig, also federnd, wodurch einerseits ein sicherer flächiger Kontakt mit dem zu messenden Objekt 1 gewährleistet ist und andererseits beim Anbau keine mechanische Überbestimmung und Rückwirkung auf den Grundkörper 11.3 resultiert. Die elastische Nachgiebigkeit ist im Beispiel durch eine mäanderförmige Gestaltung eines Bereiches des Kontaktelementes 12.3 realisiert.

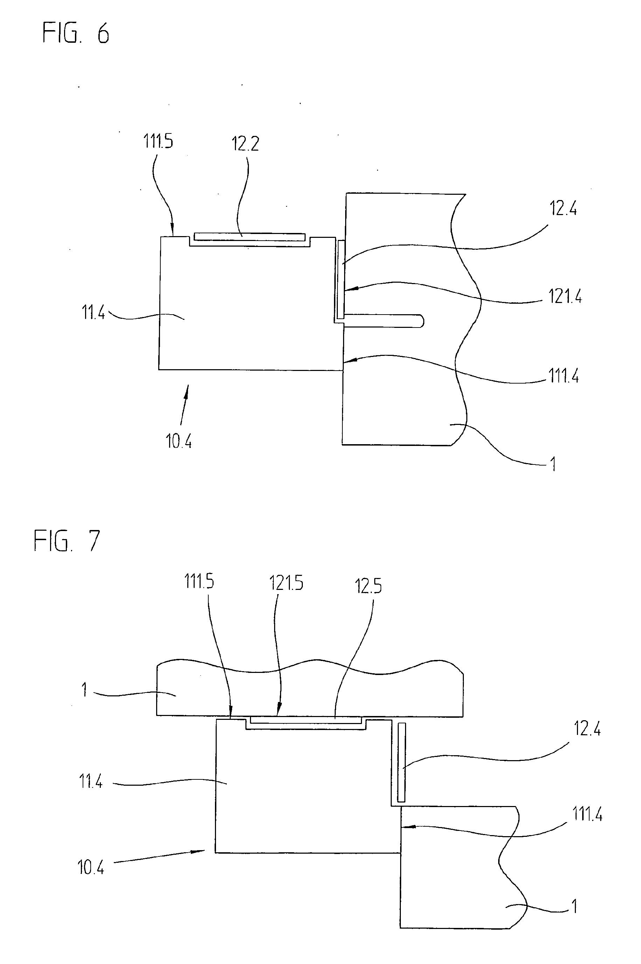

In den Figuren 6 und 7 ist schematisch eine Abtastbaueinheit 10.4 gezeigt, die zwei senkrecht zueinander angeordnete Kontaktflächen 111.4 und 111.5 des Grundkörpers 11.4 aufweist. Dies ermöglicht den wahlweisen Anbau mittels einer dieser Kontaktflächen 111.4 oder 111.5 an das zu messende Objekt 1. Bei jedem dieser Anbauvarianten ist durch die ebenfalls senkrecht zueinander angeordneten Kontaktflächen 121.4 und 121.5 von Kontaktelementen 12.4, 12.5 gewährleistet, dass zumindest eine dieser Kontaktflächen 121.4, 121.5 mit dem zu messenden Objekt 1 zur Wärmeübertragung und Wärmeableitung in Kontakt tritt.

In Figur 6 ist die Kontaktfläche 111.4 des Grundkörpers 11.4 parallel zur Kontaktfläche 121.4 des Kontaktelementes 12.4 angeordnet. Die Kontaktfläche 111.4 des Grundkörpers 11.4 kontaktiert das zu messende Objekt 1 von der Kontaktfläche 121.4 des Kontaktelementes 12.4 beabstandet. Dieser Abstand sollte möglichst groß sein, um eine Wärmeeinleitung in den Grundkörper 11.4 zu vermeiden. Die Wärmeisolierung zwischen dem Grundkörper 11.4 und dem Kontaktelement 12.4 kann durch gezielte Ausgestaltung des zu messenden Objektes 1 weiter erhöht werden. Bei dem Beispiel gemäß Figur 6 ist dazu der Ort des Kontaktes mit dem Grundkörper 11.4 vom Ort des Kontaktes mit dem Kontaktelement 12.4 beabstandet und das zu messende Objekt 1 weist eine Trennung in Form einer Nut auf. Bei dem Beispiel gemäß Figur 7 sind die Orte der Kontakte noch weiter voneinander beabstandet und es ist ebenfalls eine körperliche Trennung des zu messenden Objektes 1 realisiert.

## Patentansprüche

1. Abtastbaueinheit einer Positionsmesseinrichtung zur Abtastung einer Messteilung (8) eines Maßstabs (3), mit;
zumindest einem wärmeerzeugenden elektrischen Bauelement (7.1, 7.2, 7.3) in einem Innenraum (15.1, 15.2, 15.3) der Abtastbaueinheit (10.1, 10.2. 10.3);
einem Grundkörper (11.1, 11.2, 11.3, 11.4), der ortsfest an einem zu messenden Objekt (1) anbaubar ist, und dabei der Grundkörper (11.1, 11.2, 11.3, 11.4) mit einer ersten Kontaktfläche (111.1, 111.2, 111.3, 111.4, 11.5) an einem ersten Ort (1.11, 1.12) des zu messenden Objekts (1) in Kontakt tritt und mit
einem Kontaktelement (12.1, 12.2, 12.3, 12.4, 12.5) mit einer zweiten Kontaktfläche (121.1, 121.2, 121.3, 121.4, 121.5), die beim Anbau des Grundkörpers (11.1, 11.2, 11.3, 11.4) an einem zweiten Ort (1.2) des zu messenden Objektes (1) in Kontakt tritt, wobei die zweite Kontaktfläche (121.1, 121.2, 121,3, 121.4, 121.5) elastisch nachgiebig ausgestaltet ist und die erste Kontaktfläche (111.1, 111.2, 111.3) gegenüber der zweiten Kontaktfläche (121.1,121.2, 121.3) im nicht angebauten Zustand zurückgesetzt ist, und
dass ein Wärmeleitelement (13.1, 13.2, 13.3) zwischen dem elektrischen Bauelement (7.1, 7.2, 7.3) und dem Kontaktelement (12.1, 12.2, 12.3) vorgesehen ist, das elastisch ausgebildet ist und einerseits das elektrische Bauelement (7.1, 7.2, 7.3) und andererseits das Kontaktelement (12.1, 12.2, 12.3) kontaktiert, um einen Wärmeleitpfad (13.1, 13.2, 13.3) zu bilden, der dazu ausgelegt ist, um an dem elektrischen Bauelement (7.1, 7.2, 7.3) generierte Wärme vom Innenraum (15.1, 15.2, 15.3) der Abtastbaueinheit (10.1, 10.2. 10.3, 10.4) zu dem Kontaktelement (12.1, 12.2, 12.3, 12.4, 12.5) zu übertragen.

2. Abtastbaueinheit nach Anspruch 1, **dadurch gekennzeichnet, dass** die zweite Kontaktfläche (121.1, 121.3, 121.4, 121.5) als federndes Blech ausgebildet ist, das in Richtung des zweiten Ortes (1.2) des zu messenden Objektes (1) federnd auslenkbar ausgebildet ist.

3. Abtastbaueinheit nach Anspruch 1, **dadurch gekennzeichnet, dass** die zweite Kontaktfläche (121.2) mittels federnder Mittel (16.2) am Grundkörper (11.2) nachgiebig angeordnet ist.

4. Abtastbaueinheit nach einem der vorhergehenden Ansprüche, **dadurch gekennzeichnet, dass** die zweite Kontaktfläche (121.1, 121.2, 121.3, 121.4, 121.5) Bestandteil eines abnehmbaren Deckels ist, der den Innenraum (15.1, 15.2, 15.3) der Abtastbaueinheit (10.1, 10.2. 10.3) abdeckt.

5. Abtastbaueinheit nach einem der vorhergehenden Ansprüche, **dadurch gekennzeichnet, dass** das Kontaktelement (12.1, 12.2, 12.3, 12.4, 12.5) gegenüber dem Grundkörper (11.1, 11.2, 11.3, 11.4) wärmeisoliert angeordnet ist.

6. Abtastbaueinheit nach einem der vorhergehenden Ansprüche, **dadurch gekennzeichnet, dass** an dem Grundkörper (11.1, 11.2, 11.3) eine Abtastplatte (4.1, 4.2, 4.3) fixiert ist.

## Claims

1. Scanning unit of a position measuring device for scanning a measurement graduation (8) of a measuring scale (3), comprising:
at least one heat-generating electrical device (7.1, 7.2, 7.3) in an internal space (15.1, 15.2, 15.3) of the scanning unit (10.1, 10.2, 10.3);
a main body (11.1, 11.2, 11.3, 11.4), which is mountable in a spatially fixed manner to an object (1) to be measured, wherein a first contact surface (111.1, 111.2, 111.3, 111.4, 111.5) of the main body (11.1, 11.2, 11.3, 11.4) contacts a first location (1.11, 1.12) of the object (1) to be measured and
a contact element (12.1, 12.2, 12.3, 12.4, 12.5) having a second contact surface (121.1, 121.2, 121.3, 121.4, 121.5), which during mounting of the main body (11.1, 11.2, 11.3, 11.4) contacts the object (1) to be measured at a second location (1.2), wherein the second contact surface (121.1, 121.2, 121.3, 121.4, 121.5) is designed to be elastically flexible and the first contact surface (111.1, 111.2, 111.3) is set back in the non-mounted state with respect to the second contact surface (121.1, 121.2, 121.3), and
a heat-guiding element (13.1, 13.2, 13.3) is provided between the electrical device (7.1, 7.2, 7.3) and the contact element (12.1, 12.2, 12.3) which is of elastic design and contacts on the one side the electrical device (7.1, 7.2, 7.3) and on the other side the contact element (12.1, 12.2, 12.3) in order to form a heat conductivity path (13.1, 13.2, 13.3) which is configured to transfer heat generated at the electrical device (7.1, 7.2, 7.3) from the internal space (15.1, 15.2, 15.3) of the scanning unit (10.1, 10.2, 10.3, 10.4) to the contact element (12.1, 12.2, 12.3, 12.4, 12.5).

2. Scanning unit according to Claim 1, **characterized in that** the second contact surface (121.1, 121.3, 121.4, 121.5) is configured as a resilient metal sheet which is configured to be resiliently deflectable in the direction of the second location (1.2) of the object (1) to be measured.

3. Scanning unit according to Claim 1, **characterized in that** the second contact surface (121.2) is arranged flexibly at the main body (11.2) by means of resilient means (16.2).

4. Scanning unit according to one of the preceding claims, **characterized in that** the second contact surface (121.1, 121.2, 121.3, 121.4, 121.5) is a component part of a removable cover covering the internal space (15.1, 15.2, 15.3) of the scanning unit (10.1, 10.2, 10.3).

5. Scanning unit according to one of the preceding claims, **characterized in that** the contact element (12.1, 12.2, 12.3, 12.4, 12.5) is arranged in a thermally insulated manner with respect to the main body (11.1, 11.2, 11.3, 11.4).

6. Scanning unit according to one of the preceding claims, **characterized in that** a scanning plate (4.1, 4.2, 4.3) is fixed to the main body (11.1, 11.2, 11.3).

## Revendications

1. Sous-ensemble de palpage d'un dispositif de mesure de position pour palper une graduation de mesure (8) d'une règle graduée (3), comprenant :
au moins un composant électrique (7.1, 7.2, 7.3) générant de la chaleur dans un espace intérieur (15.1, 15.2, 15.3) du sous-ensemble de palpage (10.1, 10.2, 10.3) ;
un corps de base (11.1, 11.2, 11.3, 11.4) qui peut être monté en position fixe sur un objet (1) à mesurer, le corps de base (11.1, 11.2, 11.3, 11.4) entrant alors en contact avec une première surface de contact (111.1, 111.2, 111.3, 111.4, 111.5) en un premier endroit (1.11, 1.12) de l'objet (1) à mesurer, et entrant alors en contact avec
un élément de contact (12.1, 12.2, 12.3, 12.4, 12.5) muni d'une deuxième surface de contact (121.1, 121.2, 121.3, 121.4, 121.5) qui, lors du montage du corps de base (11.1, 11.2, 11.3, 11.4), entre en contact en un deuxième endroit (1.2) de l'objet (1) à mesurer, la deuxième surface de contact (121.1, 121.2, 121.3, 121.4, 121.5) étant configurée avec flexibilité élastique et la première surface de contact (111.1, 111.2, 111.3) étant en retrait par rapport à la deuxième surface de contact (121.1, 121.2, 121.3) dans l'état non monté ; et
un élément de conduction thermique (13.1, 13.2, 13.3) est prévu entre le composant électrique (7.1, 7.2, 7.3) et l'élément de contact (12.1, 12.2, 12.3), lequel est conçu de manière élastique et entre en contact d'une part avec le composant électrique (7.1, 7.2, 7.3) et d'autre part avec l'élément de contact (12.1, 12.2, 12.3), pour former un chemin de conduction thermique (13.1, 13.2, 13.3), lequel est conçu pour transmettre la chaleur générée au niveau du composant électrique (7.1, 7.2, 7.3) de l'espace intérieur (15.1, 15.2, 15.3) du sous-ensemble de palpage (10.1, 10.2, 10.3, 10.4) vers l'élément de contact (12.1, 12.2, 12.3, 12.4, 12.5).

2. Sous-ensemble de palpage selon la revendication 1, **caractérisé en ce que** la deuxième surface de contact (121.1, 121.3, 121.4, 121.5) est réalisée sous la forme d'une tôle élastique à ressort qui est configurée pour pouvoir être déviée par élasticité à ressort en direction du deuxième endroit (1.2) de l'objet (1) à mesurer.

3. Sous-ensemble de palpage selon la revendication 1, **caractérisé en ce que** la deuxième surface de contact (121.2) est disposée de manière flexible sur le corps de base (11.2) à l'aide de moyens élastiques à ressort (16.2).

4. Sous-ensemble de palpage selon l'une des revendications précédentes, **caractérisé en ce que** la deuxième surface de contact (121.1, 121.2, 121.3, 121.4, 121.5) fait partie d'un couvercle amovible qui recouvre l'espace intérieur (15.1, 15.2, 15.3) du sous-ensemble de palpage (10.1, 10.2, 10.3).

5. Sous-ensemble de palpage selon l'une des revendications précédentes, **caractérisé en ce que** l'élément de contact (12.1, 12.2, 12.3, 12.4, 12.5) est disposé en étant isolé thermiquement par rapport au corps de base (11.1, 11.2, 11.3, 11.4).

6. Sous-ensemble de palpage selon l'une des revendications précédentes, **caractérisé en ce qu'**une plaque de palpage (4.1, 4.2, 4.3) est fixée sur le corps de base (11.1, 11.2, 11.3).
